# FASCICULE DE BREVET EUROPEEN

(11) **EP 3 483 786 B1**
(45) Date de publication et mention de la délivrance du brevet: **06.12.2023**
(21) Numéro de dépôt: 18205083.1
(22) Date de dépôt: 08.11.2018
(51) Int. Cl.: G06V 10/82, G06V 20/40, G06V 20/52, G06V 20/70

(54) **PROCÉDÉ DE SURVEILLANCE D'UNE SCÈNE, DISPOSITIF D'ACQUISITION ET INSTALLATION ASSOCIÉS**
VERFAHREN ZUR SZENENUBERWACHUNG
METHOD FOR WATCHING A SCENE, ASSOCIATED ACQUIRING DEVICE AND INSTALLATION

(30) Priorité: 08.11.2017 FR 1701146
(43) Date de publication de la demande: 15.05.2019
(73) Titulaire: Thales, 92400 Courbevoie (FR)
(72) Inventeur: ZIEBA, Stéphane, 91767 PALAISEAU CEDEX (FR); CRAYE, Céline, 91767 PALAISEAU CEDEX (FR); GOUDOU, Jean-François, 91767 PALAISEAU CEDEX (FR); LE BARZ, Cédric, 91767 PALAISEAU CEDEX (FR)
(74) Mandataire: Lavoix

(56) Documents cités:
- WO-A1-2008/138063
- US-A1- 2017 200 066
- KARPATHY ANDREJ ET AL: "Deep visual-semantic alignments for generating image descriptions", 2015 IEEE CONFERENCE ON COMPUTER VISION AND PATTERN RECOGNITION (CVPR), IEEE, 7 juin 2015 (2015-06-07), pages 3128-3137, XP032793761, DOI: 10.1109/CVPR.2015.7298932 [extrait le 2015-10-14]
- VINYALS ORIOL ET AL: "Show and tell: A neural image caption generator", 2015 IEEE CONFERENCE ON COMPUTER VISION AND PATTERN RECOGNITION (CVPR), IEEE, 7 June 2015 (2015-06-07), pages 3156-3164, XP032793764, DOI: 10.1109/CVPR.2015.7298935 [retrieved on 2015-10-14]

## Description

Ce document concerne un procédé de surveillance d'une scène. Ce document se rapporte également à un dispositif d'acquisition d'une scène et à une installation de surveillance de scènes.

Il est souhaitable de pouvoir surveiller un environnement de la manière la plus fiable possible.

Pour cela, il est connu d'utiliser une pluralité de caméras enregistrant des vidéos de l'environnement. Le flux vidéo est compressé et transmis intégralement et de manière automatique à un centre de surveillance dans lequel chaque vidéo de surveillance est analysée par un opérateur du centre de surveillance. L'utilisation de caméras pour surveiller un environnement est ainsi extrêmement utile pour fournir au centre de surveillance des vidéos de surveillance, c'est-à-dire un ensemble d'informations précises, fiables et utiles de la situation.

Toutefois, la transmission d'informations depuis la caméra vers le centre de surveillance peut s'avérer délicate en cas de débit de transmission très faible. En outre, la transmission peut être potentiellement bruitée du fait de perturbations extérieures.

De préférence, il est également souhaitable que les informations transmises soient cryptée et fiables. De plus, il convient de faciliter l'interprétation par un opérateur humain au maximum, tout en permettant que tout opérateur puisse intervenir.

Les documents WO 2008/138063 A1 et KARPATHY ANDREJ ET AL: "Deep visual-semantic alignments for generating image descriptions", 2015 IEEE CONFERENCE ON COMPUTER VISION AND PATTERN RECOGNITION (CVPR), IEEE, 7 juin 2015 (2015-06-07), pages 3128-3137, XP032793761 présentent des procédés de surveillance de scènes.

Il existe donc un besoin pour un procédé de surveillance d'une scène qui soit de mise en oeuvre plus aisée.

A cet effet, la présente description porte sur un procédé de surveillance d'une scène conforme à l'une quelconque des revendications 1 à 5 annexées.

La présente description concerne également une installation de surveillance de scènes conforme aux revendications 6-7 annexée. L'invention est telle que définie dans les revendications indépendantes.

Des caractéristiques et avantages de l'invention apparaîtront à la lecture de la description qui va suivre, donnée uniquement à titre d'exemple non limitatif, et faite en référence aux dessins annexés, sur lesquels :
- la figure 1 est une vue schématique d'une installation comprenant en particulier un convertisseur des vidéos de surveillance en descriptions textuelles, et
- la figure 2 est une représentation d'un exemple de fonctionnement du convertisseur de la figure 1.

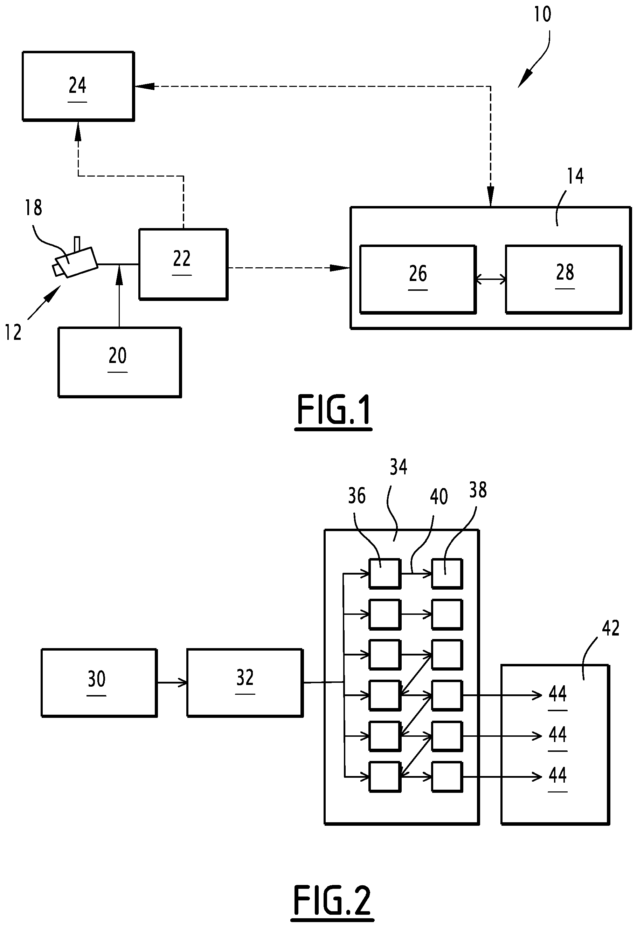

Une installation de surveillance 10 de scènes est représentée schématiquement sur la figure 1.

L'installation de surveillance 10 comporte une pluralité de dispositifs d'acquisition d'une scène 12 et un poste central d'analyse 14.

Chaque dispositif d'acquisition 12 d'une scène est dédié à une scène spécifique.

Plus précisément, chaque dispositif d'acquisition 12 est propre à observer soit une scène distincte soit une même scène vue sous un angle différent.

Pour l'exemple de la figure 1, seul un dispositif d'acquisition 12 d'une scène est représenté. Pour la suite, le dispositif d'acquisition 12 est donc le dispositif d'acquisition de la scène, étant entendu que ladite scène observée est spécifique du dispositif d'acquisition 12.

En outre, pour la suite, il est supposé que le dispositif d'acquisition 12 est propre à acquérir des vidéos de la scène étant entendu que les mêmes remarques sont valables pour un dispositif d'acquisition 12 propre à acquérir des images de la scène.

Le dispositif d'acquisition 12 comporte un capteur 18, un convertisseur 20, une mémoire 22 et une unité de transmission 24.

Selon le cas illustré, le dispositif d'acquisition 12 est une caméra de surveillance.

En l'espèce, le dispositif d'acquisition 12 est une caméra de surveillance déployée sur le terrain.

En variante, le dispositif d'acquisition 12 est une caméra embarquée par un opérateur en intervention sur le terrain. Dans un tel cas, avantageusement, le dispositif d'acquisition 12 présente des dimensions réduites, typiquement un volume d'encombrement inférieur ou égal à 100 mm x 50 mm x 30 mm, soit un volume de 150 cm³.

Le dispositif d'acquisition 12 est propre à mettre en oeuvre au moins une partie d'un procédé de surveillance de la scène.

Le capteur 18 est un capteur de vidéos de surveillance de la scène.

Le capteur 18 est propre à acquérir des vidéos de la scène.

De préférence, le capteur 18 est propre à acquérir des vidéos en continu. Le terme de « flux vidéo » est parfois utilisé.

Le capteur 18 est, par exemple, un capteur de caméra.

Le convertisseur 20 est un convertisseur des vidéos de surveillance en descriptions textuelles.

Le convertisseur 20 est propre à convertir des vidéos de surveillance en descriptions textuelles.

Le convertisseur 20 permet ainsi d'obtenir des données textuelles.

Le convertisseur 20 est, par exemple, un programme faisant partie d'un processeur du dispositif d'acquisition 12.

Cela signifie que le convertisseur 20 est embarqué sur le dispositif d'acquisition 12, en l'occurrence une caméra.

La mémoire 22 est propre à mémoriser des données.

En particulier, la mémoire 22 est propre à mémoriser les vidéos acquises par le capteur 18 et les données textuelles issues du convertisseur 20.

L'unité de transmission 24 est une unité de transmission de données vers le poste central d'analyse 14. Une telle interaction entre l'unité de transmission 24 et le poste central d'analyse 14 est représentée schématiquement sur la figure 1 par des traits pointillés.

L'unité de transmission 24 est, plus spécifiquement, propre à transmettre les données mémorisées par la mémoire 22. Une telle interaction entre l'unité de transmission 24 et la mémoire 22 est représentée schématiquement sur la figure 1 par des traits pointillés.

L'unité de transmission 24 est, en particulier, propre à transmettre les données textuelles au poste central d'analyse 14.

L'unité de transmission 24 est, selon l'exemple proposé, une antenne.

Le poste central d'analyse 14 est propre à recevoir et analyser les données textuelles provenant de chaque dispositif d'acquisition 12.

Le poste central d'analyse 14 est pourvu d'un analyseur syntaxique 26 permettant d'extraire des données textuelles des données spécifiques.

L'analyseur syntaxique 26 est parfois désigné sous le terme de parseur.

Par exemple, les données spécifiques sont des données pour lesquelles une surveillance particulière est mise en oeuvre.

Le poste central d'analyse 14 comporte, en outre, un opérateur 28 propre à analyser les données provenant de l'analyseur syntaxique 26.

Le fonctionnement de l'installation de surveillance 10 est maintenant décrit en référence à un procédé de surveillance de la scène.

Le procédé comporte une étape d'acquisition, une étape de conversion, une première étape de transmission, une étape d'interprétation, une étape de demande et une deuxième étape de transmission.

Les étapes d'acquisition et de conversion ainsi que chaque étape de transmission sont mises en oeuvre par le dispositif d'acquisition 12 alors que les étapes d'interprétation et de demande sont mises en oeuvre au niveau du poste central d'analyse 14.

Lors de l'étape d'acquisition, le capteur 18 acquiert des vidéos de surveillance de la scène.

Lors de l'étape de conversion, les vidéos de surveillance acquises sont converties en descriptions textuelles.

La conversion est mise en oeuvre par le convertisseur 20.

Selon un premier mode de réalisation, la conversion est mise en oeuvre à l'aide d'un modèle de conversion, le modèle de conversion étant un modèle issu d'un apprentissage supervisé.

L'apprentissage d'un tel modèle de conversion est illustré schématiquement par la figure 2.

Comme illustré schématiquement par la figure 2, la boîte d'entrée 30 correspond aux vidéos à analyser. Plus précisément, il est fourni à un superviseur un ensemble de vidéos à analyser que l'expert sépare en un ensemble d'entraînement et un ensemble de test. C'est l'ensemble d'entraînement qui est utilisé pour obtenir le modèle de conversion, ce modèle de conversion étant ensuite testé avec l'ensemble de test.

Dans un premier temps, un premier modèle extrait des caractéristiques visuelles de chaque image (voir boîte 32 sur la figure 2).

A titre d'exemple, le premier modèle est un réseau de neurones convolutifs.

Un réseau de neurones convolutifs est aussi désigné par l'acronyme CNN renvoyant à la terminologie anglaise de «Convolutional Neural Networks ». Un tel réseau est un type de réseau de neurones artificiels acycliques.

Dans un deuxième temps, un deuxième modèle est appliqué sur les caractéristiques visuelles pour générer une description textuelle correspondant aux caractéristiques visuelles (voir boîte 34 sur la figure 2).

Par exemple, le deuxième modèle est un réseau de neurones récurrents.

Un réseau de neurones récurrents est un réseau de neurones artificiels présentant des connexions récurrentes. Un réseau de neurones récurrents est constitué d'unités (neurones 36 et 38) interconnectés interagissant non-linéairement et pour lequel il existe au moins un cycle dans la structure. Les unités sont reliées par des arcs (synapses 40) qui possèdent un poids. La sortie d'un neurone est une combinaison non linéaire de ses entrées.

A titre d'illustration, le deuxième modèle est un réseau de neurone LSTM, LSTM étant un acronyme renvoyant à la terminologie anglaise de « Long Short-Term Memory » qui signifie littéralement « mémoire à long court-terme ».

Comme illustré schématiquement par la boîte 42 sur la figure 2, cela permet d'obtenir en sortie un certain nombre de mots composant une description textuelle 44. Seules trois mots sont représentés par simplicité dans le cas de la figure 2.

La combinaison du premier modèle et du deuxième modèle est le modèle de conversion.

D'autres apprentissages supervisés sont également utilisables pour obtenir le modèle de conversion.

De manière plus générale, le modèle de conversion est issu d'une technique d'intelligence artificielle.

Par définition, une technique d'intelligence artificielle est une technique impliquant la détermination de règles d'association entre au moins deux éléments par un ordinateur.

Selon un autre mode de réalisation, il est également mis en oeuvre un cryptage.

Par exemple, les vidéos sont d'abord converties en descriptions textuelles puis les descriptions textuelles sont ensuite cryptées pour obtenir les données textuelles.

Dans chaque mode de réalisation, il convient de comprimer une information visuelle sous forme textuelle sémantiquement représentative de la situation.

Cela suppose d'une part qu'il convient de réduire la quantité d'informations contenues dans les vidéos de surveillance à une quantité d'informations plus réduite dans les données textuelles.

Pour cela, il est souhaité que la description visuelle soit un texte simple, court et formaté selon les besoins opérationnels (typiquement une phrase).

Par exemple, la description textuelle d'une vidéo présente une longueur prédéfinie inférieure à 10 mots.

Par ailleurs, il convient que la quantité d'informations plus réduite reste pertinente pour assurer une bonne sécurité de la scène surveillée.

Par exemple, pour cela, la taille du vocabulaire correspondant au nombre de mots pouvant composer les descriptions textuelles différentes est supérieure à 200 mots.

De préférence, la taille du vocabulaire est supérieure à 400 mots.

Un bon compromis correspond à une taille de vocabulaire égale à 500 mots.

A l'issue de l'étape de conversion, il est ainsi obtenu un ensemble de données textuelles. Une telle conversion correspond ainsi à une compression d'une vidéo.

Lors de la première étape de transmission, l'unité de transmission 24 envoie chaque donnée textuelle à destination du poste central d'analyse 14.

Selon une variante, lors de la première étape de transmission, chaque donnée textuelle est envoyée plusieurs fois pour garantir une redondance.

Le poste central d'analyse 14 reçoit alors chaque donnée textuelle.

Lors de l'étape d'interprétation, l'analyseur syntaxique 26 est propre à extraire de l'ensemble des données textuelles des données spécifiques d'intérêt.

A titre d'illustration, les données spécifiques d'intérêt concernent la présence d'une personne masquée. Des termes comme « masque », « personne non visible » dans les données textuelles sont alors repérées par l'analyseur syntaxique 26 et extraites pour les présenter à l'opérateur 28 du poste central d'analyse 14.

En variante, l'étape d'interprétation est mise en oeuvre par l'opérateur 28.

A l'issue de l'étape d'interprétation, il est obtenu un ensemble de données textuelles à présenter à l'opérateur 28 du poste central d'analyse 14.

En fonction des données textuelles présentées, l'opérateur 28 du poste central d'analyse 14 peut alors avoir besoin des vidéos acquises.

Il est alors mis en oeuvre l'étape de demande d'une vidéo spécifique par le poste central d'analyse 14 puis la deuxième étape de transmission de la vidéo par le dispositif d'acquisition 12.

En variante, l'opérateur 28 du poste central d'analyse 14 sollicite une image spécifique. Il est mis en oeuvre l'étape de demande d'une image spécifique par le poste central d'analyse 14 puis la deuxième étape de transmission de l'image par le dispositif d'acquisition 12.

Le procédé permet donc de surveiller une scène avec un transfert de données peu volumineuses tout en garantissant une bonne sécurité de la scène.

Plus précisément, par rapport à une transmission compressée de la vidéo, la bande passante requise pour l'installation de surveillance 10 est bien plus faible. Le procédé permet alors une introduction de redondance, de cryptage ou de correction d'erreurs tout en garantissant une faible quantité d'information transmise sans délais de traitement. Il en résulte que chaque étape de transmission du procédé est une étape de transmission d'information sécurisée en bas débit.

Autrement formulé, le procédé permet de bénéficier de faibles signature et empreinte radio du fait de la faible quantité de données transmises par rapport à la transmission en continu d'un flux vidéo.

En outre, du fait du faible débit à transmettre, l'information est traitée plus rapidement ce qui augmente la sécurité.

De plus, pour améliorer la rapidité, les vidéos sont décrites de manière non ambigüe car la description n'est pas dépendante de l'opérateur qui analyse l'image mais bien reliée à une ontologie spécifique du domaine qui a été préalablement choisie et adaptée au cas considéré. La description est également dépourvue d'erreurs de frappe.

Il en résulte que l'interprétation des données textuelles par l'opérateur humain 28 est facilitée au maximum, et ce quelle que soit la langue de l'opérateur 28. En effet, les descriptions textuelles étant gérées de manière automatique, il suffit d'insérer un module de traduction pour que chaque description textuelle apparaisse dans toute langue souhaitée.

De plus, comme la description textuelle garantissant une meilleure représentativité du domaine et ainsi une meilleure pertinence des descriptions textuelles, il devient possible de recourir à une analyse sémantique automatique.

De préférence, l'ensemble des descriptions textuelles portent sur l'activité des éléments contenus dans les images.

Par « activité », il est entendu l'action qu'effectue l'élément. Par exemple, un individu qui s'approche d'une porte correspond à l'activité s'approcher.

Par ailleurs, le traitement ayant lieu en local sur le dispositif d'acquisition 12, la mise en oeuvre n'est pas dépendante d'une connexion fiable et performante permettant la transmission d'un flux vidéo/image en continu.

La mise en oeuvre du procédé de surveillance est donc aisée.

Selon un mode de réalisation spécifique, le procédé est mis en oeuvre de manière continue de sorte que la scène est surveillée de manière continue.

En variante, le procédé est mis en oeuvre sur une période de temps prédéfinie, en particulier certaines heures de la journée.

Selon une autre variante, le procédé est mis en oeuvre à des instants prédéfinis, par exemple toutes les dix minutes.

Le procédé est compatible avec un fonctionnement avec une pluralité de dispositifs d'acquisition 12 propre à surveiller la même scène ou avec une pluralité de dispositifs d'acquisition 12 surveillant un ensemble de scènes formant un environnement.

Dans chacun des cas précités, les étapes d'acquisition, de conversion et de transmission du procédé de surveillance sont mises en oeuvre par chaque dispositif d'acquisition 12.

Un tel procédé est utilisable dans de nombreux contextes comme un champ de bataille. Dans un tel cas, le poste central d'analyse 14 est un centre de commandement et le dispositif d'acquisition 12 est, par exemple, une caméra embarquée par un fantassin ou sur un véhicule. Selon un autre exemple, le dispositif d'acquisition 12 fait partie d'un satellite d'observation.

De manière alternative, le procédé est également utilisable pour des environnements présentant une faible couverture par un réseau, en particulier un réseau interne. Le procédé est aussi utilisable pour envoyer des informations concises à un gardien faisant sa ronde et non présent devant les écrans de contrôle. Cela rend un tel procédé particulièrement adapté pour surveiller des complexes comportant des parties extérieures et intérieures de bâtiments à surveiller, en particulier pour prévenir d'une intrusion.

Par ailleurs, dans le cas du gardien, il est considéré que l'équipement dont dispose le gardien est le poste central d'analyse 14.

## Revendications

1. Procédé de surveillance d'une scène, le procédé comportant une étape de :
- acquisition d'images ou des vidéos de surveillance d'une scène par un dispositif d'acquisition (12),
- conversion d'images ou des vidéos de surveillance en descriptions textuelles par le dispositif d'acquisition (12), pour obtenir des données textuelles, la conversion étant mise en oeuvre à l'aide d'un modèle de conversion, le modèle de conversion étant issu d'une technique d'intelligence artificielle, la technique d'intelligence artificielle étant un apprentissage supervisé,
- transmission des données textuelles vers un poste central d'analyse (14),
- extraction de données spécifiques d'intérêt depuis les données textuelles par un analyseur syntaxique (26) du poste central d'analyse et présentation de ces données spécifiques d'intérêt à un opérateur (28),
- demande d'une image ou d'une vidéo spécifique par le poste central d'analyse (14) en fonction des données spécifiques d'intérêt présentées, et
- transmission de l'image ou de la vidéo spécifique par le dispositif d'acquisition (12) au poste central d'analyse (14).

2. Procédé selon la revendication 1, dans lequel les images ou les vidéos de surveillance comportent des éléments, l'ensemble des descriptions textuelles portant sur l'activité desdits éléments.

3. Procédé selon la revendication 1 ou 2, dans lequel la description textuelle d'une image ou d'une vidéo d'une longueur prédéfinie est inférieure à 10 mots.

4. Procédé selon l'une quelconque des revendications 1 à 3, dans lequel il est défini un vocabulaire correspondant au nombre de mots différents pouvant être utilisés dans les descriptions textuelles, la taille du vocabulaire étant supérieure à 200 mots.

5. Procédé selon l'une quelconque des revendications 1 à 4, dans lequel une pluralité de dispositifs d'acquisition (12) est propre à surveiller la même scène, les étapes d'acquisition, de conversion et de transmission étant mises en oeuvre par chaque dispositif d'acquisition (12).

6. Installation de surveillance (10) de scènes comportant un dispositif d'acquisition (12) d'une scène, le dispositif d'acquisition (12) d'une scène comportant :
- un capteur (18) propre à acquérir des images ou des vidéos de surveillance d'une scène,
- un convertisseur (20) des images ou des vidéos de surveillance en descriptions textuelles, pour obtenir des données textuelles, la conversion étant mise en oeuvre à l'aide d'un modèle de conversion, le modèle de conversion étant issu d'une technique d'intelligence artificielle, la technique d'intelligence artificielle étant un apprentissage supervisé,
- une unité de transmission (24) des données textuelles vers un poste central d'analyse (14) de l'installation de surveillance (10) de scènes, le poste centrale d'analyse (14) comprenant un analyseur syntaxique (26) propre à extraire des données spécifiques d'intérêt depuis les données textuelles, le poste central d'analyse (14) étant propre à présenter ces données spécifiques d'intérêt à un opérateur (28),
le poste d'analyse étant en outre propre à demander une image ou une vidéo spécifique, l'image ou la vidéo spécifique étant demandée en fonction des données spécifiques d'intérêt présentées, le dispositif d'acquisition (12) étant propre à transmettre l'image ou la vidéo spécifique au poste d'analyse (14).

7. Installation de surveillance (10) de scènes selon la revendication 6, comportant au moins un deuxième dispositif d'acquisition (12) d'une scène.

## Patentansprüche

1. Überwachungsverfahren einer Szene, das Verfahren umfassend einen folgenden Schritt:
- Erfassen von Bildern oder Überwachungsvideos einer Szene durch eine Erfassungsvorrichtung (12),
- Konvertieren von Bildern oder Überwachungsvideos in Textbeschreibungen durch die Erfassungsvorrichtung (12), um Textdaten zu erlangen, wobei die Konvertierung mittels eines Konvertierungsmodells implementiert wird, wobei das Konvertierungsmodell aus einer Technik der künstlichen Intelligenz stammt, wobei die Technik der künstlichen Intelligenz überwachtes Lernen ist,
- Übertragen der Textdaten an eine zentrale Analysestation (14),
- Extrahieren von spezifischen Daten von Interesse aus den Textdaten durch einen Parser (26) der zentralen Analysestation und Präsentieren dieser spezifischen Daten von Interesse für einen Bediener (28),
- Anfordern eines spezifischen Bilds oder Videos durch die zentrale Analysestation (14) basierend auf den präsentierten spezifischen Daten von Interesse und
- Übertragen des spezifischen Bilds oder Videos durch die Erfassungsvorrichtung (12) an die zentrale Analysestation (14).

2. Verfahren nach Anspruch 1, wobei die Überwachungsbilder oder -videos Elemente umfassen, wobei sich die Gesamtheit der Textbeschreibungen auf die Aktivität der Elemente bezieht.

3. Verfahren nach Anspruch 1 oder 2, wobei die textuelle Beschreibung eines Bilds oder Videos mit einer vordefinierten Länge weniger als 10 Wörter ist.

4. Verfahren nach einem der Ansprüche 1 bis 3, wobei ein Vokabular definiert wird, das der Anzahl der verschiedenen Wörter entspricht, die in den textuellen Beschreibungen verwendet werden können, wobei die Größe des Vokabulars größer als 200 Wörter ist.

5. Verfahren nach einem der Ansprüche 1 bis 4, wobei eine Vielzahl von Überwachungsvorrichtungen (12) geeignet ist, um dieselbe Szene zu überwachen, wobei die Schritte eines Erfassens, Umwandelns und Übertragens von jeder Überwachungsvorrichtung (12) ausgeführt werden.

6. Überwachungsanlage (10) von Szenen umfassend eine Erfassungsvorrichtung (12) einer Szene, die Erfassungsvorrichtung (12) einer Szene umfassend:
- einen Sensor (18), der geeignet ist, um Überwachungsbilder oder -videos einer Szene zu erfassen,
- einen Konverter (20) der Überwachungsbilder oder -videos in Textbeschreibungen, um Textdaten zu erlangen, wobei die Konvertierung mittels eines Konvertierungsmodells implementiert wird, wobei das Konvertierungsmodell aus einer Technik künstlicher Intelligenz stammt, wobei die Technik künstlicher Intelligenz überwachtes Lernen ist,
- eine Übertragungseinheit (24) der Textdaten an eine zentrale Analysestation (14) der Überwachungsanlage (10) von Szenen, wobei die zentrale Analysestation (14) einen Syntaxparser (26) umfasst, der geeignet ist, um spezifische Daten von Interesse aus den Textdaten zu extrahieren, wobei die zentrale Analysestation (14) dazu geeignet ist, diese spezifischen Daten von Interesse einem Bediener (28) zu präsentieren,
wobei die Analysestation ferner geeignet ist, um ein spezifisches Bild oder Video anzufordern, wobei das spezifische Bild oder Video abhängig von den dargestellten spezifischen Daten von Interesse angefordert wird, wobei die Erfassungsvorrichtung (12) geeignet, um das spezifische Bild oder Video an die Analysestation (14) zu übertragen.

7. Überwachungsanlage (10) von Szenen nach Anspruch 6, mindestens umfassend eine zweite Erfassungsvorrichtung (12) einer Szene.

## Claims

1. A method for watching a scene, the method comprising a step of:
- acquisition of surveillance videos or images of a scene by an acquisition device (12),
- conversion of surveillance videos or images into text descriptions by the acquisition device (12), in order to obtain text data, the conversion being implemented using a conversion model, the conversion model being derived from an artificial intelligence technique, the artificial intelligence technique being supervised learning,
- transmission of text data to a central analysis station (14),
- extraction of specific data of interest from the text data by a syntax analyser (26) at the central analysis station and presentation of this specific data of interest to an operator (28),
- requesting a specific image or video, by the central analysis station (14), as a function of the specific data of interest presented, and
- transmission of the specific image or video by the acquisition device (12) to the central analysis station (14).

2. The method according to claim 1, wherein the surveillance images or videos comprise elements, all the text descriptions relating to the activity of the said elements.

3. The method according to claim 1 or 2, wherein the text description of an image or video of a predefined length is less than 10 words.

4. The method according to any one of claims 1 to 3, wherein a vocabulary is defined corresponding to the number of different words that can be used in the text descriptions, the size of the vocabulary being greater than 200 words.

5. The method according to any one of claims 1 to 4, wherein a plurality of acquisition devices (12) are suitable for watching the same scene, the acquisition, conversion and transmission steps being implemented by each acquisition device (12).

6. A scene-watching installation (10), comprising a scene acquisition device (12), the scene acquisition device (12) comprising:
- a sensor (18) capable of acquiring surveillance videos or images of a scene,
- a converter (20) of surveillance videos or images into text descriptions, in order to obtain text data, the conversion being implemented using a conversion model, the conversion model being derived from an artificial intelligence technique, the artificial intelligence technique being supervised learning,
- a unit (24) for transmitting the text data to a central analysis station (14) of the scene-watching installation (10), the central analysis station (14) comprising a syntactic analyser (26) suitable for extracting specific data of interest from the text data, the central analysis station (14) being suitable for presenting this specific data of interest to an operator (28),
the analysis station further being adapted to request a specific image or video, the specific image or video being requested as a function of the specific data of interest presented, the acquisition device (12) being suitable for transmitting the specific image or video to the analysis station (14).

7. The scene-watching installation (10) according to claim 6, comprising at least one second scene acquisition device (12).
